(19) **Europäisches Patentamt European Patent Office Office européen des brevets**

(11) **EP 4 765 551 A1**

(12) **EUROPEAN PATENT APPLICATION**
published in accordance with Art. 153(4) EPC

(43) Date of publication:
24.06.2026 Bulletin 2026/26

(21) Application number: 24871524.5

(22) Date of filing: 07.08.2024

(51) International Patent Classification (IPC):
*H02J 3/46* (2026.01)   *H02J 3/00* (2026.01)
*H02J 3/38* (2026.01)

(52) Cooperative Patent Classification (CPC):
H02J 3/00; H02J 3/38; H02J 3/46

(86) International application number:
PCT/JP2024/028277

(87) International publication number:
WO 2025/069722 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023170424

(71) Applicant: Panasonic Intellectual Property
Management Co., Ltd.
Kadoma-shi, Osaka 571-0057 (JP)

(72) Inventor: KITA, Atsuyoshi
Kadoma-shi, Osaka 571-0057 (JP)

(74) Representative: Grünecker Patent- und
Rechtsanwälte
PartG mbB
Leopoldstraße 4
80802 München (DE)

(54) **POWER SYSTEM CONTROL METHOD, POWER SYSTEM CONTROL DEVICE, AND POWER SYSTEM CONTROL PROGRAM**

(57) Based on a predicted value of power demand and a predicted value of the generated power of a power generation system using a natural energy, this power system control device determines the generated power of a fuel cell system in the future so that the sum of the fluctuation of the generated power of the fuel cell system, the purchased power from a power grid, and the reverse power flow power to the power grid becomes the minimum region, and outputs a command for controlling the fuel cell system so as to output the determined generated power.

FIG.1

## Description

### Technical Field

The present disclosure relates to a technique for controlling a power system that supplies power.

### Background Art

For example, Patent Literature 1 discloses a power supply system that supplies power. The power supply system includes: a fuel cell capable of generating power using fuel and capable of supplying generated power to a load connected to a system power supply; a power storage system having a storage battery chargeable and dischargeable according to a power demand of the load after the generated power of the fuel cell is supplied and a power generator capable of generating power using natural energy and charging the generated power to the storage battery; and a control unit capable of controlling an operation of the fuel cell. Then, the control unit can suppress the generated power of the fuel cell when a predetermined condition set according to power trading is satisfied.

However, in the conventional technique described above, the operation of the fuel cell to suppress reverse power flow power and purchased power while suppressing deterioration of the fuel cell is not considered, and further improvement is required.

### Citation List

### Patent Literature

Patent Literature 1: JP 2021-58027 A

### Summary of Invention

The present disclosure has been made to solve the above problems, and an object of the present disclosure is to provide a technique capable of operating the fuel cell so as to suppress the reverse power flow power and the purchased power while suppressing the deterioration of the fuel cell.

A power system control method according to the present disclosure is a power system control method in a computer, the method including determining generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

According to the present disclosure, it is possible to operate the fuel cell so as to suppress the reverse power flow power and the purchased power while suppressing the deterioration of the fuel cell.

### Brief Description of Drawings

FIG. 1 is a diagram illustrating an example of an overall configuration of a power control system in the present embodiment.
FIG. 2 is a diagram illustrating a configuration of a control device in the present embodiment.
FIG. 3 is a flowchart for describing control processing of a power system by the control device in an embodiment of the present disclosure.
FIG. 4 is a flowchart for describing the control processing of the power system by the control device in a modification of the embodiment of the present disclosure.

### Description of Embodiments

(Knowledge underlying present disclosure)

Conventionally, there is a demand for satisfying power demand by controlling a fuel cell system, a solar power generation system, and a storage battery. The power supply system of Patent Literature 1 includes a fuel cell, a storage battery, a power generation unit capable of generating power using natural energy, and a control unit capable of controlling an operation of the fuel cell, and the control unit switches the fuel cell from a power generation state to a standby state when a predetermined condition set according to power trading is satisfied. Then, examples of the predetermined condition include whether or not the storage battery is in a discharged state, whether or not power generation cost of the fuel cell is lower than power purchase cost of system power supply, whether or not the storage battery has a remaining charge amount to a dischargeable extent, and whether or not the generated power of the power generation unit sold to the system power supply is larger than the generated power of the fuel cell.

When standby and restart of the fuel cell are repeated frequently, an excessive burden is applied to a stack. Therefore, repetition of the restart of the fuel cell is not desirable from the viewpoint of durability of the fuel cell, and in the conventional power supply system, the restart of the fuel cell is set to be once a day as a limit.

As described above, in the conventional technique, deterioration of the fuel cell is suppressed by limiting the number of times of restarting the fuel cell, however, since suppression of reverse power flow power and purchased power is not considered, it is difficult to solve a problem of operating the fuel cell so as to suppress the reverse power flow power and the purchased power while suppressing the deterioration of the fuel cell.

In order to solve the above problems, the following technique is disclosed.

(1) A power system control method according to an aspect of the present disclosure is a power system control method in a computer, the method including determining generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

According to this configuration, the generated power of the fuel cell system in the future is determined so that the sum of the fluctuation of the generated power of the fuel cell system, the purchased power from the power grid, and the reverse power flow power to the power grid is the minimum region. Thus, since the fluctuation of the generated power of the fuel cell system is the minimum region, the deterioration of the fuel cell can be suppressed. In addition, since the reverse power flow power to the power grid is the minimum region and the purchased power from the power grid is the minimum region, the reverse power flow power and the purchased power can be suppressed. Therefore, the fuel cell can be operated so as to suppress the reverse power flow power and the purchased power while suppressing the deterioration of the fuel cell.

(2) The power system control method according to (1) may further include: acquiring an actual value of the power demand and an actual value of generated power of the power generation system in a first period; and calculating a predicted value of the power demand in a second period after the first period based on the actual value of the power demand in the first period, and calculating a predicted value of the generated power of the power generation system in the second period based on the actual value of the generated power of the power generation system in the first period, in which determining the generated power may include determining the generated power of the fuel cell system in the second period.

According to this configuration, the predicted value of the power demand in the second period after the first period can be calculated based on the actual value of the power demand in the first period, and the predicted value of the generated power of the power generation system in the second period can be calculated based on the actual value of the generated power of the power generation system in the first period.

(3) In the power system control method according to (1) or (2), determining the generated power may include multiplying at least one of the fluctuation of the generated power of the fuel cell system, the purchased power from the power grid, and the reverse power flow power to the power grid by a coefficient.

According to this configuration, for example, a positive coefficient smaller than 1 is multiplied by the fluctuation of the generated power of the fuel cell system, so that the generated power of the fuel cell system in the second period can be determined by emphasizing suppression of the purchased power and the reverse power flow power rather than suppression of deterioration of the fuel cell system. Further, a positive coefficient larger than 1 is multiplied by the fluctuation of the generated power of the fuel cell system, so that the generated power of the fuel cell system in the second period can be determined by emphasizing the suppression of the deterioration of the fuel cell system rather than the suppression of the purchased power and the reverse power flow power.

(4) The power system control method according to any one of (1) to (3), in which determining the generated power may include further summing storage capacity of a storage battery system.

When the generated power of an actual solar power generation system is larger than the predicted value, the storage capacity of the storage battery may be fully charged, and the reverse power flow power may increase. Therefore, by reducing the storage capacity of the storage battery system, even when the generated power of the actual solar power generation system is larger than the predicted value, surplus of the generated power is charged in the storage battery, and it is possible to prevent the reverse power flow power from increasing.

(5) In the power system control method according to (4), determining the generated power may include multiplying the storage capacity of the storage battery system by a coefficient.

According to this configuration, the generated power of the fuel cell system in the second period can be determined in consideration of balance between the storage capacity of the storage battery system and the fluctuation of the generated power of the fuel cell system, the purchased power from the power grid, and the reverse power flow power to the power grid.

(6) In the power system control method according to any one of (1) to (5), determining the generated power may include satisfying a constraint condition that the purchased power from the power grid is equal to or greater than a value obtained by multiplying the predicted value of the power demand by a power purchase target rate.

According to this configuration, a predetermined ratio of the power demand is covered by the purchased power from the power grid. Thus, even when the generated power of the actual solar power generation system is larger than the predicted value, the surplus of the generated power is consumed by a load by reducing the purchased power, and it is possible to prevent the reverse power flow power from increasing.

(7) The power system control method according to (6) may further include: acquiring an actual value of the reverse power flow power to the power grid in a first period; and changing the power purchase target rate according to the actual value of the reverse power flow power.

According to this configuration, since the power purchase target rate is changed according to the actual value of the reverse power flow power in the first period, the reverse power flow power can be suppressed more reliably.

(8) In the power system control method according to (7), changing the power purchase target rate may include increasing the power purchase target rate when the actual value of the reverse power flow power is equal to or greater than a threshold, and decreasing the power purchase target rate when the actual value of the reverse power flow power is smaller than the threshold.

According to this configuration, when the actual value of the reverse power flow power increases, the power purchase target rate can also be increased, and the reverse power flow power in the second period can be suppressed. When the actual value of the reverse power flow power decreases, the power purchase target rate can also be decreased, and the purchased power in the second period can be suppressed.

(9) The power system control method according to any one of (1) to (8) may further include outputting a command for controlling the fuel cell system to output the generated power determined.

According to this configuration, the fuel cell system can be controlled to output the generated power determined.

(10) In the power system control method according to any one of (1) to (9), the power generation system may be a solar power generation system.

According to this configuration, the solar power generation system can be used as the power generation system using the natural energy.

In addition, the present disclosure can be implemented not only as the power system control method that executes characteristic processing as described above but also, for example, as a power system control device having a characteristic configuration corresponding to the characteristic processing executed by the power system control method. The present disclosure can also be implemented as a computer program for causing a computer to execute characteristic processing included in such a power system control method. Therefore, also in the following other aspects, the same effects as those of the above-described power system control method can be obtained.

(11) A power system control device according to another aspect of the present disclosure includes a determination unit configured to determine generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

(12) A power system control program according to another aspect of the present disclosure causes a computer to function so as to determine generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

(13) A non-transitory computer-readable recording medium according to another aspect of the present disclosure records a control program for a power system, the control program causing a computer to function to determine generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

Hereinafter, embodiments of the present disclosure will be described with reference to the accompanying drawings. Note that each of the embodiments described below illustrates a specific example of the present disclosure. Numerical values, shapes, constituent elements, steps, order of steps, and the like shown in the following embodiments are merely examples, and are not intended to limit the present disclosure. Further, among the constituent elements in the following embodiments, a constituent element not described in an independent claim indicating the highest concept is described as an optional constituent element. Further, in all the embodiments, respective contents can be combined.

(Embodiments)

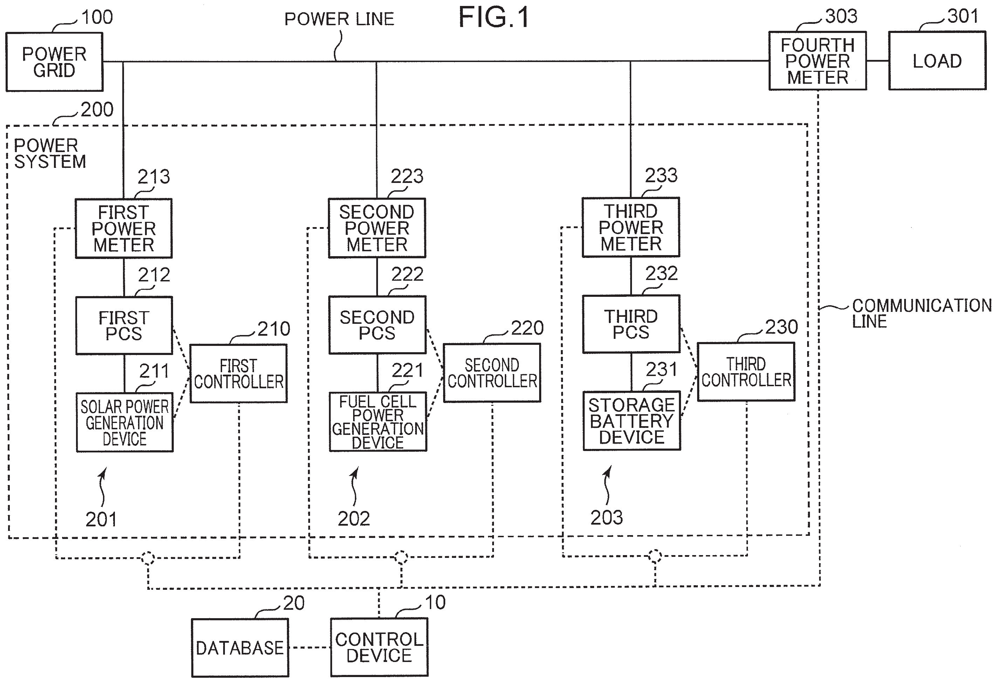

FIG. 1 is a diagram illustrating an example of an overall configuration of a power control system in the present embodiment. Note that in FIG. 1, a power line is indicated by a solid line, and a communication line is indicated by a broken line.

The power control system in the present embodiment includes a power system 200 and a control device 10 that controls the power system 200.

The power system 200 in the present embodiment is connected to a power grid 100 and a load 301 via the power line. Then, the power system 200 supplies power to the load 301. The power grid 100 has a function of supplying grid power, and is connected to the load 301 via the power line.

Note that the grid power is also called commercial power, and is, for example, AC power of 50 Hz or 60 Hz. Therefore, when power supplied from the power system 200 is insufficient for power consumption of the load 301, the power grid 100 supplies the load 301 with power to make up for a shortage. That is, the shortage of the power is purchased as the purchased power. On the other hand, when the power supplied from the power system 200 is surplus with respect to the power consumption of the load 301, the surplus power is taken over by the power grid 100, that is, the surplus power is sold as the reverse power flow power. Note that the load 301 in the present embodiment includes one or more appliances or devices that consume power. The power consumption of the load 301 is also referred to as power demand amount. In addition, a power consumer such as a factory or a facility includes the load 301.

The power system 200 includes a solar power generation system 201, a fuel cell system 202, and a storage battery system 203.

The solar power generation system 201 includes a first controller 210, a solar power generation device 211, a first power conditioning system (PCS) 212, and a first power meter 213. Note that the solar power generation system 201 is an example of the power generation system using the natural energy.

The solar power generation device 211 includes, for example, one or more solar power generation units, and converts sunlight into power by photoelectric conversion, to output the power. The solar power generation unit is, for example, a solar power generation panel. Note that the solar power generation device 211 is hereinafter also simply referred to as solar cell. The first PCS 212 converts the power output from the solar power generation device 211 into the same power as the grid power and outputs the power. The first power meter 213 measures the power output from the solar power generation device 211 via the first PCS 212, that is, the grid power, and outputs a signal indicating the measured power to the control device 10. The first controller 210 controls the solar power generation device 211 and the first PCS 212. For example, the first controller 210 controls the solar power generation device 211 and the first PCS 212 according to a command from the control device 10.

The fuel cell system 202 includes a second controller 220, a fuel cell power generation device 221, a second PCS 222, and a second power meter 223.

The fuel cell power generation device 221 includes, for example, one or more fuel cell units, and generates power by chemically reacting hydrogen and oxygen. Hydrogen source used for power generation is, for example, a hydrogen storage or a hydrogen infrastructure. The fuel cell unit is, for example, a fuel cell stack device. Note that the fuel cell power generation device 221 is hereinafter also simply referred to as fuel cell. The second PCS 222 converts the power output by the power generation of the fuel cell power generation device 221 into the same power as the grid power and outputs the power. The second power meter 223 measures the power output from the fuel cell power generation device 221 via the second PCS 222, that is, the grid power, and outputs the signal indicating the measured power to the control device 10. The second controller 220 controls the fuel cell power generation device 221 and the second PCS 222. For example, the second controller 220 adjusts the power output from the fuel cell power generation device 221 and the second PCS 222 according to the command from the control device 10.

The storage battery system 203 includes a third controller 230, a storage battery device 231, a third PCS 232, and a third power meter 233.

The storage battery device 231 includes, for example, one or more storage battery units, and performs charging or discharging. The storage battery unit is, for example, a storage battery pack. Note that the storage battery device 231 is hereinafter also simply referred to as storage battery. The third PCS 232 converts the power output by discharge of the storage battery device 231 into the same power as the grid power and outputs the power. Alternatively, the third PCS 232 converts the grid power to charge the storage battery device 231. The third power meter 233 measures the power output from the storage battery device 231 via the third PCS 232, that is, the grid power, and outputs the signal indicating the measured power to the control device 10. In addition, the third power meter 233 measures the power output from the solar power generation device 211 or the fuel cell power generation device 221 and charged in the storage battery device 231, and outputs the signal indicating the measured power to the control device 10. The third controller 230 controls the storage battery device 231 and the third PCS 232. For example, the third controller 230 adjusts the power discharged from the storage battery device 231 or the power charged in the storage battery device 231 according to the command from the control device 10.

The control device 10 in the present embodiment is a control device of the power system 200, and is connected to each of a fourth power meter 303, the power system 200, and database 20 via the communication line. That is, the control device 10 communicates with each of the fourth power meter 303, the power system 200, and the database 20 via the communication line. Note that in the present embodiment, power notified, transmitted, commanded, acquired, or received via the communication line is not the power itself but data indicating a magnitude of the power, for example, wattage. In addition, the fourth power meter 303 measures the power consumption of the load 301.

Such a control device 10 receives a signal indicating power measured by the power meter from each of the first power meter 213, the second power meter 223, the third power meter 233, and the fourth power meter 303 for each sampling period. Then, the control device 10 writes the power indicated by these signals into the database 20. Further, the control device 10 receives a signal indicating a state of charge (SOC) of the storage battery device 231 from the third controller 230 for each sampling period, and writes the SOC into the database 20. Note that a specific example of the sampling period is 30 seconds, 1 minute, or the like, but is not limited to these times. The SOC of the storage battery device 231 is a charge capacity of the storage battery device 231, and is hereinafter also referred to as storage battery SOC.

The database 20 is a recording medium for recording the actual value of the power, the storage battery SOC, and the like. Note that the recording medium is a hard disk drive, a random access memory (RAM), a read only memory (ROM), a semiconductor memory, or the like. Further, the recording medium may be volatile or non-volatile. Note that in the present embodiment, the database 20 is not provided in the control device 10, but may be provided in the control device 10.

The power consumption of the load 301 is the power measured by the fourth power meter 303. The generated power of the solar power generation device 211 is the power output from the solar power generation device 211 via the first PCS 212, and is measured by the first power meter 213. It can also be said that such generated power of the solar power generation device 211 is an output of the solar power generation system 201 or the solar power generation device 211. Similarly, the generated power of the fuel cell power generation device 221 is the power output from the fuel cell power generation device 221 via the second PCS 222, and is the power measured by the second power meter 223. It can also be said that such generated power of fuel cell power generation device 221 is an output of the fuel cell system 202 or the fuel cell power generation device 221.

When the reverse power flow power is generated, it is assumed that the surplus is generated in the generated power of the solar power generation system 201, and the surplus power flows back to the power grid. In such a case, from the viewpoint of improving a self-consumption rate of the generated power of the solar power generation system 201, it may be desirable to reduce the generated power of the fuel cell system 202.

In addition, when the generated power of the fuel cell system 202 is reduced, there is a possibility that the power is purchased from the power grid 100. As described above, it is not desirable from the viewpoint of utility costs to purchase the power from the power grid 100 by reducing the generated power of the fuel cell system 202.

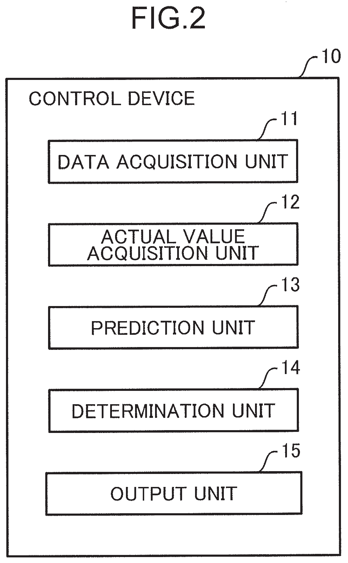

FIG. 2 is a diagram illustrating a configuration of the control device 10 in the present embodiment.

The control device 10 includes at least a computer system including, for example, a control program, a processing circuit such as a processor or a logic circuit that executes the control program, and a recording device such as an internal memory or an accessible external memory that stores the control program. Note that the control device 10 may be implemented by, for example, hardware implementation by a processing circuit, execution of a software program held in a memory by the processing circuit or distributed from an external server, or a combination of these hardware implementation and software implementation.

The control device 10 includes a data acquisition unit 11, an actual value acquisition unit 12, a prediction unit 13, a determination unit 14, and an output unit 15.

The data acquisition unit 11 acquires signals indicating four powers from the fourth power meter 303, the first power meter 213, the second power meter 223, and the third power meter 233 for each sampling period. Then, the data acquisition unit 11 writes each of numerical values of the four powers into the database 20 as the actual value. The four powers are the power consumption (power demand) of the load 301, the generated power of the solar power generation device 211, the generated power of the fuel cell power generation device 221, and discharge power or charge power of the storage battery device 231. The discharge power and the charge power are collectively referred to as charge and discharge power. Further, the data acquisition unit 11 acquires a signal indicating the storage battery SOC from the third controller 230 together with the above-described signals indicating the four powers for each sampling period. Then, the data acquisition unit 11 writes the storage battery SOC into the database 20 as the actual value.

Note that the discharge power of the storage battery device 231 in the present embodiment is the power discharged from the storage battery device 231 via the third PCS 232, and is the power measured by the third power meter 233. Similarly, the charge power of the storage battery device 231 in the present embodiment is the power charged in the storage battery device 231 from the solar power generation device 211, the fuel cell power generation device 221, or the like via the third PCS 232, and is the power measured by the third power meter 233.

The actual value acquisition unit 12 acquires the actual value of the power demand, and the actual value of the generated power of the solar power generation system 201 in the first period.

The actual value acquisition unit 12 acquires the actual value for each of a plurality of unit times defining the first period. The first period is a period in which the actual value acquisition unit 12 acquires the actual value of the power demand and the actual value of the generated power of the solar power generation system 201. The first period is, for example, 24 hours. However, this is an example, and an appropriate value such as 48 hours, 12 hours, or 36 hours can be adopted as the first period. The unit time is a time obtained by dividing the first period into predetermined time intervals. An example of the unit time is 1 hour, 2 hours, 30 minutes, or the like. Therefore, when the unit time is 1 hour, the actual value for each hour is acquired.

The actual value acquisition unit 12 reads the actual value of the power demand for each unit time in the first period from the database 20. In addition, the actual value acquisition unit 12 reads the actual value of the generated power of the solar power generation system 201 for each unit time in the first period from the database 20.

The prediction unit 13 calculates the predicted value of the power demand in the second period after the first period based on the actual value of the power demand in the first period.

In addition, the prediction unit 13 calculates a predicted value of the generated power of the solar power generation system 201 in the second period based on the actual value of the generated power of the solar power generation system 201 in the first period.

The prediction unit 13 calculates the predicted value for each of the plurality of unit times defining the second period. The second period is a period in which the prediction unit 13 predicts the predicted value of the power demand and the predicted value of the generated power of the solar power generation system 201. The second period is, for example, 24 hours. However, this is an example, and an appropriate value such as 48 hours, 12 hours, or 36 hours can be adopted as the second period. The unit time is a time obtained by dividing the second period into predetermined time intervals. An example of the unit time is 1 hour, 2 hours, 30 minutes, or the like. Therefore, when the unit time is 1 hour, the predicted value is calculated for each hour.

The actual value acquisition unit 12 may further acquire the day of the week of the second period and the predicted value of weather information for each unit time in the second period. The weather information includes at least one of temperature, humidity, precipitation, and weather around the power customer. The actual value acquisition unit 12 may acquire, for example, a predicted value of the weather information from a weather information server connected via a network.

The prediction unit 13 stores in advance a first prediction model for predicting the power demand in the second period, and stores in advance a second prediction model for predicting the generated power of the solar power generation system 201 in the second period.

The prediction unit 13 calculates the predicted value of the power demand for each unit time in the second period by inputting the actual value of the power demand for each unit time in the first period and the day of the week of the second period to the first prediction model.

The first prediction model is a model obtained by performing machine learning on learning data in which the actual value of the power demand before a reference time point and the day of the week after the reference time point are used as explanatory variables and the actual value of the power demand after the reference time point corresponding to the explanatory variables is used as an objective variable. The reference time point refers to a time point serving as a starting point of the second period set at the time of learning. The actual value of the power demand after the reference time point corresponding to the explanatory variables is an actual value of the power demand in the second period set at the time of learning. The first prediction model is machine-learned so as to minimize an error between the predicted value of the power demand for each unit time output when the explanatory variables are input and the actual value of the power demand for each unit time in the second period which is the objective variable corresponding to the input explanatory variables.

In addition, the prediction unit 13 inputs the actual value of the generated power of the solar power generation system 201 for each unit time in the first period and the predicted value of the weather information for each unit time in the second period to the second prediction model, thereby calculating the predicted value of the generated power of the solar power generation system 201 for each unit time in the second period.

The second prediction model is a model obtained by performing machine learning on learning data in which the actual value of the generated power of the solar power generation system before the reference time point and the predicted value of the weather information after the reference time point are used as the explanatory variables, and the actual value of the generated power of the solar power generation system after the reference time point corresponding to the explanatory variables is used as the objective variable. The reference time point refers to a time point serving as a starting point of the second period set at the time of learning. The actual value of the generated power of the solar power generation system after the reference time point corresponding to the explanatory variables is the actual value of the generated power of the solar power generation system in the second period set at the time of learning. The second prediction model is machine-learned so as to minimize an error between the predicted value of the generated power of the solar power generation system for each unit time output when the explanatory variables are input and the actual value of the generated power of the solar power generation system for each unit time in the second period which is the objective variable corresponding to the input explanatory variables.

Note that, as a machine learning model adopted by the first prediction model and the second prediction model, for example, an appropriate model such as random forest, LightGBM, or deep neural network can be adopted.

The determination unit 14 determines the generated power of the fuel cell system 202 in the future so that the sum of the fluctuation of the generated power of the fuel cell system 202, the purchased power from the power grid 100, and the reverse power flow power to the power grid 100 is a minimum region (in other words, so that the sum is a value within an allowable range including a minimum value), based on the predicted value of the power demand and the predicted value of the generated power of the solar power generation system 201. The minimum region is a range around the minimum value including the minimum value of the sum, and when the sum is a value within the minimum region, the purchased power, the reverse power flow power, and the fluctuation of the generated power of the fuel cell are suppressed. Further, the minimum region includes, for example, the minimum value and is a range of about the minimum value + 10%.

The determination unit 14 determines the generated power of the fuel cell system 202 for each unit time in the second period so that the sum of the fluctuation of the generated power of the fuel cell system 202 for each unit time in the second period, the purchased power from the power grid 100 for each unit time in the second period, and the reverse power flow power to the power grid 100 for each unit time in the second period is the value within the minimum region, based on the predicted value of the power demand for each unit time in the second period and the predicted value of the generated power of the solar power generation system 201 for each unit time in the second period.

The determination unit 14 determines the generated power of the fuel cell system 202 by solving an optimization problem using a mixed integer programming solver. In addition, the determination unit 14 may use a neighborhood search such as a hill-climbing method, an annealing method, or a genetic algorithm.

Constraint conditions of the optimization problem are expressed by the following formulas (1) to (8).

$$bt_i + fc_i + gr_i^{in} - gr_i^{out} = d_i \cdots (1)$$

$$-BTPOWMAX \leq bt_i \leq BTPOWMAX \cdots (2)$$

$$0 \leq gr_i^{in}, gr_i^{out}, fc_i, g_i \cdots (3)$$

$$fc_i \leq FCMAX \cdots (4)$$

$$0 \leq soc_i \leq BTCAPMAX \cdots (5)$$

$$-g_i \leq fc_i - fc_{i-1} \leq g_i \text{ where } i = 2, \cdots, 24 \cdots (6)$$

$$-g_1 \leq fc_1 - FCINIT \leq g_1 \cdots (7)$$

[Math. 1]

$$BTCAPINIT + \sum_i -(bt_i) = soc_i \quad \cdots (8)$$

In addition, an objective function of the optimization problem is expressed by the following formula (9).

[Math. 2]

$$min \sum_i (gr_i^{in} + gr_i^{out} + g_i) \quad \cdots (9)$$

i is an index for specifying the unit time in the second period. For example, when the second period is 24 hours and the unit time is 1 hour, i is 1, ⋯, 24.

$d_i$ represents a value obtained by subtracting the predicted value (kW) of the generated power of the solar power generation system 201 from the predicted value (kW) of the power demand. $d_i$ is a value for each unit time in the second period.

BTCAPMAX represents a maximum storage capacity (kWh) of the storage battery system 203. BTCAPINIT represents an initial storage capacity (kWh) of the storage battery system 203. BTPOWMAX represents maximum discharge power (kW) of the storage battery system 203. FCMAX represents maximum generated power (kW) of the fuel cell system 202. FCINIT represents initial generated power (kW) of the fuel cell system 202. The maximum storage capacity BTCAPMAX, the initial storage capacity BTCAPINIT, the maximum discharge power BTPOWMAX, the maximum generated power FCMAX, and the initial generated power FCINIT are stored in the database 20. Further, a plurality of variables, the plurality of constraint conditions, and the objective function are stored in the database 20.

$bt_i$ is a variable representing the discharge power (kW) of the storage battery system 203. $fc_i$ is a variable representing the generated power (kW) of the fuel cell system 202. $gr_i^{in}$ is a variable representing the purchased power (kW) supplied from the power grid 100. $gr_i^{out}$ is a variable representing the reverse power flow power (kW) supplied to the power grid 100. $soc_i$ is a variable representing the storage capacity (kWh) of the storage battery system 203. $g_i$ is a variable representing the fluctuation (kWh) of the generated power of the fuel cell system 202 from a previous unit time ($g_i = fc_i - fc_{i-1}$).

The formula (1) of the constraint condition defines that the power satisfies a balance between demand and supply. That is, the value $d_i$ obtained by subtracting the predicted value of the generated power of the solar power generation system 201 from the predicted value of the power demand must be equal to a value obtained by subtracting the reverse power flow power $gr_i^{out}$ supplied to the power grid 100 from the sum of the discharge power $bt_i$ of the storage battery system 203, the generated power $fc_i$ of the fuel cell system 202, and the purchased power $gr_i^{in}$ supplied from the power grid 100.

The formula (2) of the constraint condition defines an upper limit (BTPOWMAX) and a lower limit (-BTPOWMAX) of the discharge power $bt_i$ of the storage battery system 203. That is, the discharge power $bt_i$ of the storage battery system 203 must be in a range between the lower limit (-BTPOWMAX) and the upper limit (BTPOWMAX).

The formula (3) of the constraint condition defines that the purchased power $gr_i^{in}$, the reverse power flow power $gr_i^{out}$, the generated power $fc_i$ of the fuel cell system 202, and the fluctuation $g_i$ of the generated power of the fuel cell system 202 are positive values. That is, the purchased power $gr_i^{in}$, the reverse power flow power $gr_i^{out}$, the generated power $fc_i$ of the fuel cell system 202, and the fluctuation $g_i$ of the generated power of the fuel cell system 202 must be positive values.

The formula (4) of the constraint condition defines an upper limit (FCMAX) of the generated power $fc_i$ of the fuel cell system 202. That is, the generated power $fc_i$ of the fuel cell system 202 must be less than or equal to the upper limit (FCMAX).

The formula (5) of the constraint condition defines that the storage capacity $soc_i$ of the storage battery system 203 is in a range between 0 and the maximum storage capacity. That is, the storage capacity $soc_i$ of the storage battery system 203 must be in the range between 0 and the maximum storage capacity.

The formula (6) of the constraint condition defines the fluctuation $g_i$ when the unit time i is 2, $\cdots$, 24, and the formula (7) of the constraint condition defines a fluctuation $g_l$ when the unit time i is 1. That is, when the unit time i is 2 to 24, the fluctuation $g_i$ in the unit time i = 2 to 24 must be a value obtained by subtracting generated power $fc_{i-1}$ of the fuel cell system 202 in the previous unit time i-1 from the generated power $fc_i$ of fuel cell system 202 in the unit time i. Further, when the unit time i is 1, the fluctuation $g_l$ in the unit time i=1 must be a value obtained by subtracting the initial generated power (FCINIT) of the fuel cell system 202 from the generated power $fc_l$ of the fuel cell system 202.

The formula (8) of the constraint condition defines that the storage capacity $soc_i$ of the storage battery system 203 is a value obtained by subtracting a total value of the discharge power $bt_i$ in each unit time i from the initial storage capacity (BTCAPINIT). That is, the storage capacity $soc_i$ of the storage battery system 203 must be the value obtained by subtracting the total value of the discharge power $bt_i$ in each unit time i from the initial storage capacity (BTCAPINIT).

The objective function is a function that minimizes the sum of the purchased power $gr_i^{in}$, the reverse power flow power $gr_i^{out}$, and the fluctuation $g_i$ of the generated power of the fuel cell system 202.

The determination unit 14 inputs the plurality of variables, the plurality of constraint conditions, and the objective function described above into the mixed integer programming solver, thereby calculating values of the plurality of variables that satisfy the plurality of constraint conditions and make the objective function to be the minimum region. Thus, the determination unit 14 determines the generated power $fc_i$ of the fuel cell system 202 for each unit time in the second period. From the above, the generated power of the fuel cell system 202 is planned.

The output unit 15 outputs, to the power system 200, a command for controlling the fuel cell system 202 to output the generated power determined by the determination unit 14. The output unit 15 outputs, to the fuel cell system 202 of the power system 200, a command for controlling the fuel cell system 202 to output the generated power $fc_i$ for each unit time in the second period. When the command is input from the control device 10, the second controller 220 of the fuel cell system 202 controls the fuel cell power generation device 221 such that the generated power $fc_i$ is generated in a first unit time of the second period.

The output unit 15 outputs a command for controlling the power generation of the generated power of the fuel cell to the second controller 220 via the communication line. The second controller 220 controls the fuel cell power generation device 221 and the second PCS 222 in accordance with a command from the output unit 15.

The control device 10 controls the fuel cell power generation device 221 and the second PCS 222 via the second controller 220 such that the determined generated power of the fuel cell power generation device 221 is output in the second period.

Further, when the fuel cell power generation device 221 is generating the generated power determined in the second period, the control device 10 controls the storage battery device 231 and the third PCS 232 via the third controller 230. Specifically, when a sum of the generated power of the solar power generation device 211 and the generated power of the fuel cell power generation device 221 is larger than the power consumption of the load 301, the control device 10 causes the storage battery device 231 to charge. On the other hand, when the sum is smaller than the power consumption, the control device 10 causes the storage battery device 231 to discharge so as to satisfy power consumption D.

Subsequently, control processing of the power system 200 by the control device 10 in the embodiment of the present disclosure will be described.

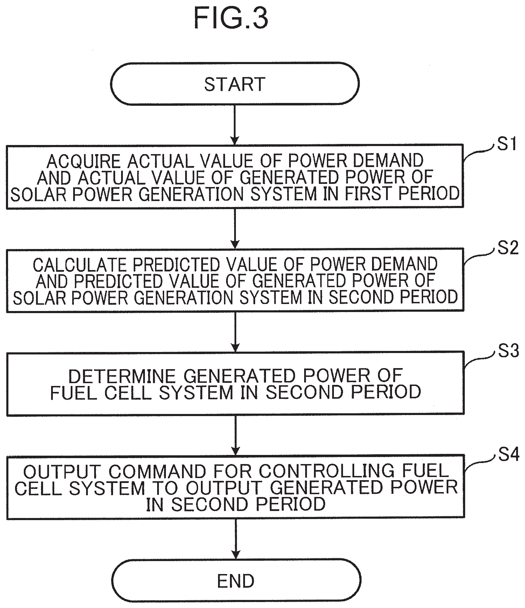

FIG. 3 is a flowchart for describing control processing of the power system 200 by the control device 10 in the embodiment of the present disclosure. This flowchart is started, for example, at a predetermined planning time point. The control processing may be executed, for example, when the planning time point is 0:00 am and it is 0:00 am every day. In this case, a period from 0:00 am to a time 24 hours before is referred to as the first period, a period from 0:00 am to a time 24 hours after is referred to as the second period, and the generated power of the fuel cell system 202 in the second period may be determined. Then, this flowchart may be executed every 24 hours. Note that this flowchart may be executed every hour.

First, in step S1, the actual value acquisition unit 12 acquires the actual value of the power demand, and the actual value of the generated power of the solar power generation system 201 in the first period.

Next, in step S2, the prediction unit 13 calculates the predicted value of the power demand in the second period based on the actual value of the power demand in the first period, and calculates the predicted value of the generated power of the solar power generation system 201 in the second period based on the actual value of the generated power of the solar power generation system 201 in the first period.

Next, in step S3, based on the predicted value of the power demand and the predicted value of the generated power of the solar power generation system 201, the determination unit 14 determines the generated power of the fuel cell system 202 in the second period so that the sum of the fluctuation of the generated power of the fuel cell system 202, the purchased power from the power grid 100, and the reverse power flow power to the power grid 100 is the minimum region. At this time, the determination unit 14 determines the generated power $fc_i$ of the fuel cell system 202 for each unit time in the second period so that the constraint conditions shown in the formulas (1) to (8) are satisfied and the objective function shown in the formula (9) is the minimum region.

Next, in step S4, the output unit 15 outputs, to the power system 200, the command for controlling the fuel cell system 202 to output the generated power in the second period determined by the determination unit 14.

As described above, the generated power of the fuel cell system 202 in the second period is determined such that the sum of the fluctuation of the generated power of the fuel cell system 202, the purchased power from the power grid 100, and the reverse power flow power to the power grid 100 is the minimum region. Thus, since the fluctuation of the generated power of the fuel cell system 202 is the minimum region, the deterioration of the fuel cell can be suppressed. In addition, since the reverse power flow power to the power grid 100 is the minimum region and the purchased power from the power grid 100 is the minimum region, the reverse power flow power and the purchased power can be suppressed. Therefore, the fuel cell can be operated so as to suppress the reverse power flow power and the purchased power while suppressing the deterioration of the fuel cell.

Note that in the present embodiment, determination unit 14 may multiply at least one of the fluctuation $g_i$ of the generated power of the fuel cell system 202, the purchased power $gr_i^{in}$ from the power grid 100, and the reverse power flow power $gr_i^{out}$ to the power grid 100 by a coefficient. That is, the determination unit 14 may determine the generated power of the fuel cell system 202 in the second period so that a sum of a value obtained by multiplying the fluctuation $g_i$ of the generated power of the fuel cell system 202 for each unit time in the second period by a first coefficient, the purchased power $gr_i^{in}$ from the power grid 100 for each unit time in the second period, and the reverse power flow power $gr_i^{out}$ to the power grid 100 for each unit time in the second period is a minimum region (in other words, so that the sum is a value within an allowable range including a minimum value). The minimum region includes, for example, the minimum value and is a range of about the minimum value + 10%. The first coefficient is, for example, 0.01. In this case, the objective function is expressed by the following formula (10).

[Math. 3]

$$min \sum_i (gr_i^{in} + gr_i^{out} + g_i * 0.01) \quad \cdot\cdot\cdot (10)$$

By multiplying the fluctuation $g_i$ of the generated power of the fuel cell system 202 by a positive first coefficient smaller than 1, the generated power of the fuel cell system 202 can be determined with more emphasis on suppressing the purchased power $gr_i^{in}$ and the reverse power flow power $gr_i^{out}$. Further, by multiplying the fluctuation $g_i$ of the generated power of the fuel cell system 202 by a positive first coefficient larger than 1, the generated power of the fuel cell system 202 can be determined with more emphasis on suppressing the deterioration of the fuel cell system 202.

Note that in the formula (10), the fluctuation $g_i$ of the generated power of the fuel cell system 202 is multiplied by the first coefficient, but the present disclosure is not particularly limited thereto, and at least one of the purchased power $gr_i^{in}$ and the reverse power flow power $gr_i^{out}$ may be multiplied by the first coefficient. In addition, the first coefficient may be a positive value smaller than 1, or may be a positive value of 1 or more.

In addition, the first coefficient may be multiplied by all of the fluctuation $g_i$ of the generated power of the fuel cell system 202, the purchased power $gr_i^{in}$, and the reverse power flow power $gr_i^{out}$. In this case, first coefficients by which each is multiplied may be all the same, may be all different, or may be partially the same.

In addition, the determination unit 14 may further sum the storage capacity of the storage battery system 203. That is, the determination unit 14 may determine the generated power of the fuel cell system 202 for each unit time in the second period so that a sum of fluctuation $g_i$ of the generated power of the fuel cell system 202 for each unit time in the second period, the purchased power $gr_i^{in}$ from the power grid 100 for each unit time in the second period, the reverse power flow power $gr_i^{out}$ to the power grid 100 for each unit time in the second period, and the storage capacity $soc_i$ of the storage battery system 203 for each unit time in the second period is a minimum region (in other words, so that the sum is a value within an allowable range including a minimum value). The minimum region includes, for example, the minimum value and is a range of about the minimum value + 10%.

In addition, the determination unit 14 may multiply the storage capacity of the storage battery system 203 by a coefficient. That is, the determination unit 14 may determine the generated power of the fuel cell system 202 for each unit time in the second period so that a sum of fluctuation $g_i$ of the generated power of the fuel cell system 202 for each unit time in the second period, the purchased power $gr_i^{in}$ from the power grid 100 for each unit time in the second period, the reverse power flow power $gr_i^{out}$ to the power grid 100 for each unit time in the second period, and a value obtained by multiplying the storage capacity $soc_i$ of the storage battery system 203 for each unit time in the second period by a second coefficient is a minimum region (in other words, so that the sum is a value within an allowable range including a minimum value). The minimum region includes, for example, the minimum value and is a range of about the minimum value + 10%. The second coefficient is, for example, 0.00001. In this case, the objective function is expressed by the following formula (11).

[Math. 4]

$$min \sum_i (gr_i^{in} + gr_i^{out} + g_i * 0.01 + soc_i * 0.00001) \quad \cdot\cdot\cdot (11)$$

Note that in the above formula (11), the fluctuation $g_i$ of the generated power of the fuel cell system 202 is multiplied by the first coefficient.

When the generated power of the actual solar power generation system 201 is larger than the predicted value, the storage capacity of the storage battery may be fully charged, and the reverse power flow power may increase. Therefore, by setting the storage capacity of the storage battery system 203 to the minimum region, even when the generated power of the actual solar power generation system 201 is larger than the predicted value, the surplus of the generated power is charged in the storage battery, and it is possible to prevent the reverse power flow power from increasing. Note that the second coefficient only needs to be a positive value smaller than 1, and may be any value.

In the present embodiment, the determination unit 14 may further add a constraint condition that the purchased power from the power grid 100 is equal to or greater than a value obtained by multiplying the predicted value of the power demand by the power purchase target rate. That is, the constraint conditions of the optimization problem may further include a constraint condition expressed by the following formula (12).

$$gr_i^{in} \geq \text{power demand}_i * \beta \cdots (12)$$

$\beta$ represents the power purchase target rate to be multiplied by the predicted value of the power demand. The power purchase target rate is a positive value smaller than 1. The formula (12) of the constraint condition defines that the

purchased power $gr_i^{in}$ is equal to or greater than a predetermined ratio of the predicted value of the power demand. That is, the purchased power $gr_i^{in}$ must be equal to or greater than a value obtained by multiplying the predicted value of the power demand for the unit time i by the power purchase target rate $\beta$.

In this manner, the predetermined ratio of the power demand is covered by the purchased power from the power grid 100. Thus, even when the generated power of the actual solar power generation system 201 is larger than the predicted value, the surplus of the generated power is consumed by the load 301 by reducing the purchased power, and it is possible to prevent the reverse power flow power from increasing.

In a modification of the present embodiment, the actual value acquisition unit 12 may acquire the actual value of the reverse power flow power to the power grid 100 in the first period. The actual value acquisition unit 12 may acquire the actual value of the reverse power flow power for each unit time in the first period. Then, the control device 10 may further include a change unit. The change unit may change the power purchase target rate $\beta$ according to the actual value of the reverse power flow power in the first period.

More specifically, the change unit may increase the power purchase target rate $\beta$ when the actual value of the reverse power flow power is equal to or greater than the threshold, and may decrease the power purchase target rate $\beta$ when the actual value of the reverse power flow power is smaller than the threshold. When the reverse power flow power $gr_i^{out}$ is equal to or greater than the threshold, the change unit may change current power purchase target rate $\beta$ to a smaller value of $\beta+0.1$ and $\beta max$. $\beta max$ is an upper limit of the power purchase target rate $\beta$. In addition, when the reverse power flow power $gr_i^{out}$ is smaller than the threshold, the change unit may change the current power purchase target rate $\beta$ to a larger value of $\beta-0.1$ and $\beta min$. $\beta min$ is a lower limit of the power purchase target rate $\beta$. Note that a value to be added to the power purchase target rate $\beta$ or a value to be subtracted from the power purchase target rate $\beta$ is not limited to 0.1, and may be any value as long as it is a positive value smaller than 1.

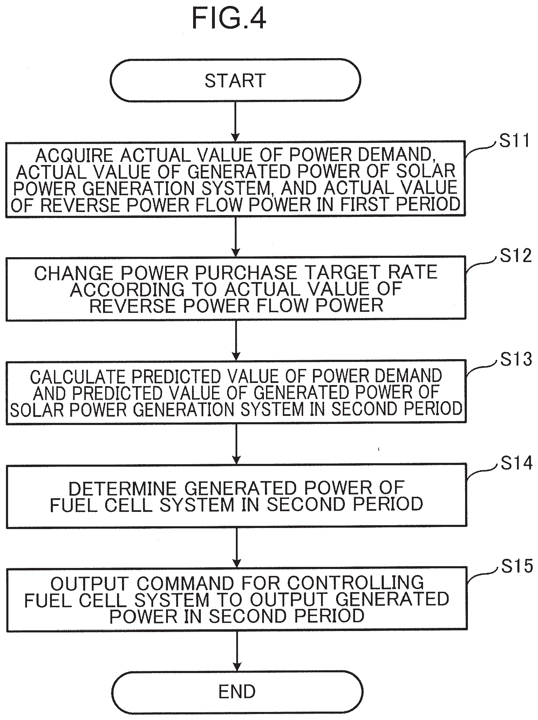

FIG. 4 is a flowchart for describing the control processing of the power system 200 by the control device 10 in the modification of the embodiment of the present disclosure.

First, in step S11, the actual value acquisition unit 12 acquires the actual value of the power demand, the actual value of the generated power of the solar power generation system 201, and the actual value of the reverse power flow power to the power grid 100 in the first period.

Next, in step S12, the change unit changes the power purchase target rate $\beta$ in the second period according to the actual value of the reverse power flow power in the first period. Note that the change unit changes the power purchase target rate $\beta$ for each unit time in the second period according to the actual value of the reverse power flow power for each unit time in the first period.

Next, in step S13, the prediction unit 13 calculates the predicted value of the power demand in the second period based on the actual value of the power demand in the first period, and calculates the predicted value of the generated power of the solar power generation system 201 in the second period based on the actual value of the generated power of the solar power generation system 201 in the first period.

Next, in step S14, based on the predicted value of the power demand and the predicted value of the generated power of the solar power generation system 201, the determination unit 14 determines the generated power of the fuel cell system 202 in the second period so that the sum of the fluctuation of the generated power of the fuel cell system 202, the purchased power from the power grid 100, and the reverse power flow power to the power grid 100 is the minimum region. At this time, the determination unit 14 determines the generated power $fc_i$ of the fuel cell system 202 for each unit time in the second period so that the constraint conditions shown in the formulas (1) to (8) and (12) are satisfied and the objective function shown in the formula (9) is the minimum region.

Next, in step S15, the output unit 15 outputs, to the power system 200, the command for controlling the fuel cell system 202 to output the generated power in the second period determined by the determination unit 14.

As described above, since the power purchase target rate $\beta$ is changed according to the actual value of the reverse power flow power in the first period, the reverse power flow power can be suppressed more reliably.

Note that the determination unit 14 may use charging or discharging of the storage battery in order to reduce the sum of the fluctuation of the generated power of the fuel cell system, the purchased power from the power grid, and the reverse power flow power to the power grid. For example, the determination unit 14 may use charging or discharging of the storage battery system in order to suppress the fluctuation of the generated power of the fuel cell system. Specifically, when a difference between the predicted value of the power demand and the predicted value of the generated power of the power generation system using the natural energy fluctuates, the determination unit 14 may perform control so that at least a part of the fluctuation is covered by charging or discharging of the storage battery system. Thus, the fluctuation of the generated power of the fuel cell system is suppressed.

Note that depending on the SOC of the storage battery, control covered by charging or discharging of the storage battery system is limited. For example, when the SOC of the storage battery is greater than an upper limit smaller than 100%, control to cover at least a part of the fluctuation with charging of the storage battery system is limited, and when the SOC of the storage battery is smaller than a lower limit larger than 0%, control to cover at least a part of the fluctuation with discharging of the storage battery system is limited.

Note that in each of the above embodiments, each constituent element may be implemented by being configured with dedicated hardware or by execution of a software program suitable for each constituent element. Each constituent element may be implemented by a program execution unit such as a CPU or a processor reading and executing a software program recorded in the recording medium such as a hard disk or a semiconductor memory. In addition, the program may be executed by another independent computer system by recording and transferring the program on the recording medium or transferring the program via the network.

Some or all functions of the devices according to the embodiment of the present disclosure are implemented as large scale integration (LSI) which is typically an integrated circuit. These may be individually integrated into one chip, or may be integrated into one chip so as to include some or all of these. Further, the circuit integration is not limited to LSI, and may be implemented by a dedicated circuit or a general-purpose processor. A field programmable gate array (FPGA) that can be programmed after manufacturing of the LSI or a reconfigurable processor in which connection and setting of circuit cells inside the LSI can be reconfigured may be used.

Some or all of the functions of the device according to the embodiment of the present disclosure may be implemented by a processor such as a CPU executing a program.

Numbers used above are all illustrated to specifically describe the present disclosure, and the present disclosure is not limited to the illustrated numbers.

Order in which each step illustrated in the above flowchart is executed is exemplified for specifically describing the present disclosure, and may be any order other than the above as long as a similar effect can be obtained. In addition, some of the above steps may be executed simultaneously (in parallel) with other steps.

**Industrial Applicability**

The technique according to the present disclosure is useful as a technique for controlling a power system that supplies power because the fuel cell can be operated so as to suppress the reverse power flow power and the purchased power while suppressing the deterioration of the fuel cell.

**Claims**

1. A power system control method in a computer, the method comprising determining generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

2. The power system control method according to claim 1, further comprising:

   acquiring an actual value of the power demand and an actual value of generated power of the power generation system in a first period; and
   calculating a predicted value of the power demand in a second period after the first period based on the actual value of the power demand in the first period, and calculating a predicted value of the generated power of the power generation system in the second period based on the actual value of the generated power of the power generation system in the first period, wherein
   determining the generated power includes determining the generated power of the fuel cell system in the second period.

3. The power system control method according to claim 1 or 2, wherein determining the generated power includes multiplying at least one of the fluctuation of the generated power of the fuel cell system, the purchased power from the power grid, and the reverse power flow power to the power grid by a coefficient.

4. The power system control method according to claim 1 or 2, wherein determining the generated power includes further summing storage capacity of a storage battery system.

5. The power system control method according to claim 4, wherein determining the generated power includes multiplying the storage capacity of the storage battery system by a coefficient.

6. The power system control method according to claim 1 or 2, wherein determining the generated power includes satisfying a constraint condition that the purchased power from the power grid is equal to or greater than a value obtained by multiplying the predicted value of the power demand by a power purchase target rate.

7. The power system control method according to claim 6, further comprising:

   acquiring an actual value of the reverse power flow power to the power grid in a first period; and
   changing the power purchase target rate according to the actual value of the reverse power flow power.

8. The power system control method according to claim 7, wherein changing the power purchase target rate includes increasing the power purchase target rate when the actual value of the reverse power flow power is equal to or greater than a threshold, and decreasing the power purchase target rate when the actual value of the reverse power flow power is smaller than the threshold.

9. The power system control method according to claim 1 or 2, further comprising outputting a command for controlling the fuel cell system to output the generated power determined.

10. The power system control method according to claim 1 or 2, wherein the power generation system is a solar power generation system.

11. A power system control device comprising a determination unit configured to determine generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

12. A power system control program causing a computer to function to determine generated power of a fuel cell system in future so that a sum of fluctuation of the generated power of the fuel cell system, purchased power from a power grid, and reverse power flow power to the power grid is a minimum region, based on a predicted value of power demand and a predicted value of generated power of a power generation system using natural energy.

FIG.1

# FIG.2

CONTROL DEVICE 10

DATA ACQUISITION UNIT 11

ACTUAL VALUE ACQUISITION UNIT 12

PREDICTION UNIT 13

DETERMINATION UNIT 14

OUTPUT UNIT 15

# FIG.3

START

ACQUIRE ACTUAL VALUE OF POWER DEMAND AND ACTUAL VALUE OF GENERATED POWER OF SOLAR POWER GENERATION SYSTEM IN FIRST PERIOD — S1

CALCULATE PREDICTED VALUE OF POWER DEMAND AND PREDICTED VALUE OF GENERATED POWER OF SOLAR POWER GENERATION SYSTEM IN SECOND PERIOD — S2

DETERMINE GENERATED POWER OF FUEL CELL SYSTEM IN SECOND PERIOD — S3

OUTPUT COMMAND FOR CONTROLLING FUEL CELL SYSTEM TO OUTPUT GENERATED POWER IN SECOND PERIOD — S4

END

# FIG.4

START

ACQUIRE ACTUAL VALUE OF POWER DEMAND, ACTUAL VALUE OF GENERATED POWER OF SOLAR POWER GENERATION SYSTEM, AND ACTUAL VALUE OF REVERSE POWER FLOW POWER IN FIRST PERIOD — S11

CHANGE POWER PURCHASE TARGET RATE ACCORDING TO ACTUAL VALUE OF REVERSE POWER FLOW POWER — S12

CALCULATE PREDICTED VALUE OF POWER DEMAND AND PREDICTED VALUE OF GENERATED POWER OF SOLAR POWER GENERATION SYSTEM IN SECOND PERIOD — S13

DETERMINE GENERATED POWER OF FUEL CELL SYSTEM IN SECOND PERIOD — S14

OUTPUT COMMAND FOR CONTROLLING FUEL CELL SYSTEM TO OUTPUT GENERATED POWER IN SECOND PERIOD — S15

END

## INTERNATIONAL SEARCH REPORT

| International application No. |
|---|
| **PCT/JP2024/028277** |

### A. CLASSIFICATION OF SUBJECT MATTER

*H02J 3/46*(2006.01)i; *H02J 3/00*(2006.01)i; *H02J 3/38*(2006.01)i
FI:   H02J3/46; H02J3/00 180; H02J3/38 120; H02J3/38 170; H02J3/00 170

According to International Patent Classification (IPC) or to both national classification and IPC

### B. FIELDS SEARCHED

Minimum documentation searched (classification system followed by classification symbols)

H02J3/46; H02J3/00; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-217091 A (SENDAI GREEN COMMUNITY SUISHIN KYOGIKAI) 17 November 2014 (2014-11-17) paragraphs [0018]-[0486] | 1-5, 9-12 |
| A | paragraphs [0018]-[0486] | 6-8 |
| A | JP 2021-058027 A (DAIWA HOUSE INDUSTRY CO., LTD.) 08 April 2021 (2021-04-08) entire text, all drawings | 1-12 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/028277**

| Patent document cited in search report | | | Publication date (day/month/year) | Patent family member(s) | Publication date (day/month/year) |
|---|---|---|---|---|---|
| JP | 2014-217091 | A | 17 November 2014 | (Family: none) | |
| JP | 2021-058027 | A | 08 April 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021058027 A